# EUROPÄISCHE PATENTANMELDUNG

(11) **EP 0 945 175 A1**
(43) Veröffentlichungstag der Anmeldung: **29.09.1999**
(21) Anmeldenummer: 99105623.5
(22) Anmeldetag: 19.03.1999
(51) Int. Cl.: B01J 20/20, C02F 1/28

(54) **Verfahren zum Konditionieren von kohlenstoffhaltigen Adsorbentien**

(30) Priorität: 21.03.1998 DE 19812543
(71) Anmelder: Felgener, Gerd W., 41515 Grevenbroich (DE)
(72) Erfinder: Felgener, Gerd W., 41515 Grevenbroich (DE)
(74) Vertreter: Koepsell, Helmut, Dipl.-Ing.

(57) **Zusammenfassung**

Die Erfindung betrifft ein Verfahren zum Konditionieren von kohlenstoffhaltigen Adsorbentien, beispielsweise Herdofenkoks aus Braunkohle, die mineralische Begleitstoffe enthalten und insbesondere zur Reinigung von Flüssigkeiten verwendet werden. Die Adsorbentien werden vor ihrer Verwendung der Einwirkung einer Waschflüssigkeit ausgesetzt, die wenigstens einen Teil der Verunreinigungen der Adsorbentien eluiert und aus diesen entfernt.

## Beschreibung

Die Erfindung betrifft ein Verfahren zum Konditionieren von kohlenstoffhaltigen Adsorbentien gemäß dem Oberbegriff des Anspruches 1.

Es ist bekannt, Prozeß- und Abwässer unter Verwendung von Aktivkohle oder anderen Adsorbentien zu reinigen, die beispielsweise in Form von Festbettfiltern oder Festbettreaktoren in loser Schüttung eingesetzt werden, wobei die Wässer beim Passieren der Schüttung gereinigt werden. Die Schüttung kann im Bedarfsfall nicht nur als Adsorbens, sondern auch als Filtermaterial, Katalysator und/oder Träger für Mikroorganismen genutzt werden.

In letzter Zeit wird für diese Zwecke in vielen Fällen Herdofenkoks, der durch Pyrolyse von Braunkohle hergestellt wird, verwendet. Dieser Herdofenkoks weist Adsorptionseigenschaften auf, die nicht wesentlich schlechter sind als die der üblichen Aktivkohle, wobei er jedoch erheblich billiger ist. Allerdings unterliegt die Verwendung dieses Herdofenkokses gewissen Einschränkungen, da zumindest Teile der mineralischen Begleitstoffe, die als Aschebestandteile vorliegen, durch das zu reinigende, die Koksschüttung durchströmende Wasser eluiert werden. Da der Aschegehalt, der getrockneten Braunkohle von zum Beispiel 2,5 % beim Verkoken eine Anreicherung auf beispielsweise 9,5 % im Braunkohlenkoks erfährt, können die aus dem Kohlenstoffgerüst des Kokses eluierten Bestandteile auch quantitativ ein erhebliches Problem darstellen, da sie in dem gereinigten Wasser als unerwünschte, häufig auch nicht zugelassene Fremdstoffe enthalten sind. Es wird somit bei hohen Aschegehalten ein Stoffaustausch im Wasser in der Weise stattfinden, daß wenigstens ein Teil der im Wasser enthaltenden Verunreinigungen vom Koks adsorbiert wird, wobei jedoch gleichzeitig andere, gegebenenfalls unerwünschte Bestandteile aus dem Adsorbens eluiert werden und dann im behandelten Wasser in Lösung vorhanden sind. In Abhängigkeit von der Beschaffenheit der mineralischen Begleitstoffe können diese auch eine Verschiebung des pH-Wertes der behandelten Flüssigkeit bewirken, die häufig unerwünscht, ggf. auch unzulässig ist.

Diese Auswirkungen der mineralischen Begleitstoffe des Herdofenkokses haben bisher dessen Anwendung als Adsorbens zum Reinigen von Flüssigkeiten auf solche beschränkt, die stärker verschmutzt sind, so daß das Vorhandensein der aus dem Adsorbens eluierten Stoffe nicht stört.

Aus der DE-PS 39 25 205 ist ein Verfahren zum Konditionieren von schwefelhaltigem Koks bekannt, bei welchem eine Schüttung von trockenem Koks etwa bei Atmosphärendruck und Temperaturen zwischen 90 und 100° C mit einem Anteile von Wasserdampf enthaltenden Gas behandelt und dabei gleichzeitig Sauerstoff durch die Schüttung hindurchgeleitet wird. Ein so behandelter Koks setzt bei Berührung mit Wasser praktisch keinen sulfidischen Schwefel mehr frei.

Der Erfindung geht aus von einem Verfahren der einleitend beschriebenen Art. Ihr liegt die Aufgabe zugrunde, Adsorbentien, die mineralische Begleitstoffe enthalten, auf einfache Weise so vorzubehandeln, daß letztere weitgehend entfernt werden und eine Eluierung von ggf. noch vorhandenen Resten dieser Verunreinigungen zu keiner unzulässigen Veränderung oder Beeinträchtigung der Qualität des unter Verwendung der Adsorbentien gereinigten Wassers führt.

Zur Lösung dieser Aufgabe schlägt die Erfindung vor, daß das Adsorbens vor seiner Verwendung der Einwirkung einer Waschflüssigkeit ausgesetzt wird, die wenigstens einen Teil der die Verunreinigungen bildenden Begleitstoffe des Adsorbens eluiert und aus diesem entfernt.

Da als Waschflüssigkeit normalerweise Wasser verwendet und das Verfahren bei atmosphärischem Druck und Umgebungstemperatur durchgeführt werden kann, erfordert das erfindungsgemäße Verfahren keinen großen Aufwand. Dies gilt insbesondere dann, wenn die beladene Waschflüssigkeit auf einfache Weise gereinigt und wieder in das Verfahren zum Konditionieren des Adsorbens zurückgeführt wird.

Als besonders zweckmäßig hat sich eine Verfahrensführung herausgestellt, bei welcher das beladene Waschwasser der Einwirkung eines sauren, vorzugsweise CO₂-haltigen Gases ausgesetzt wird, um wenigstens einen Teil der basischen Verunreinigung aus dem beladenen Waschwasser auszufällen. Insbesondere beim bereits erwähnten Herdofenkoks aus Braunkohle wird ein Teil der eluierten Begleitstoffe häufig in Form von Ca/Mg-Oxiden vorliegen, da die Aschen vieler Braunkohlen diese Begleitmineralien enthalten. Sie werden als Ca-/Mg-Hydroxide aus dem Adsorbens eluiert.

Bei Vorhandensein der vorerwähnten basischen Begleitmineralien ist es zweckmäßig, den pH-Wert der Waschflüssigkeit unter 8 einzustellen. Dies kann im Zusammenhang mit dem Ausfällen dieser Begleitmineralien in der Weise geschehen, daß entsprechende Mengen an saurem Gas oder eines anderen sauren Mediums der Waschflüssigkeit zugemischt werden und ein Teil des Gases oder des anderen Mediums in der gereinigten Waschflüssigkeit in Lösung verbleibt.

Die Lehre gemäß der Erfindung erschließt vor allem dem aus Braunkohle hergestellten Herdofenkoks neue Anwendungsgebiete, insbesondere im Zusammenhang mit der Reinigung relativ sauberer Wässer, an deren Beschaffenheit nach der Reinigung hohe Anforderungen gestellt werden.

Ein weiterer Vorteil der erfindungsgemäßen Konditionierung des Adsorbens besteht in seiner dadurch verursachten besseren Benetzbarkeit und in der deutlich verlängerten Standzeit im Adsorptionsbett bzw.- reaktor. Das Herauslösen von mineralischen Begleitstoffen aus dem Kohlenstoffgerüst durch das Konditionieren erschließt zusätzliche innere Oberflächen, sei es dadurch, daß sie zugänglich gemacht werden, sei es dadurch, daß sie zusätzlich entstehen. Tatsächlich weist ein auf die erfindungsgemäße Weise konditionierter Herdofenkoks eine Standzeit auf, die - bei sonst gleichen Bedingungen - nahezu das Doppelte der Standzeit eines unbehandelten Herdofenkokses beträgt.

Der auf die vorbeschriebene Weise behandelte Herdofenkoks kann auch als Kulturboden im pflanzenbaulichen Bereich verwendet werden. Hier können seine adsorbierenden Eigenschaften ausgenutzt werden, um den Herdofenkoks mit Makro- und Mikronährstoffen zu versehen, die quantitativ auf den Bedarf der jeweiligen Pflanzen abgestimmt sind.

Das Verfahren gemäß der Erfindung kann in optimaler Weise mit einem Prozeß gekoppelt werden, bei dessen Durchführung ein saures Abgas, insbesondere CO₂ entsteht. Bei diesem Prozeß kann es sich beispielsweise um eine Anlage zum Brennen von Kalk handeln. Das CO₂-haltige Abgas bewirkt beim Kontakt mit dem das Eluat bildenden Waschwasser eine Ausfällung der Ca/Mg/Hydroxide als Carbonate. Diese Fällungsreaktionen schließen das Fällen weiterer in Lösung gegangener Spurenverunreinigungen im Waschwasser im Zuge der sogenannten Simultan- oder Einschlußfällung ein. Damit werden auch andere mit dem sauren Gas nicht reagierende Verunreinigungen aus dem Waschwasser entfernt. Die ausgefällten Carbonate in Form von Kalkstein und Dolomit können der Anlage zum Kalkbrennen aufgegeben werden, so daß auch insoweit eine Kreislaufführung möglich ist. Allerdings verursacht das Verfahren gemäß der Erfindung auch dann, wenn die ausgefällten Carbonate nicht in eine Anlage zum Kalkbrennen zurückgeführt werden, ökologisch keine Probleme, da Kalkstein bzw. Dolomit normalerweise problemlos entsorgt werden können, zumal die gegebenenfalls vorhandenen Spurenverunreinigungen in vielen Fällen quantitativ vernachlässigbar sind.

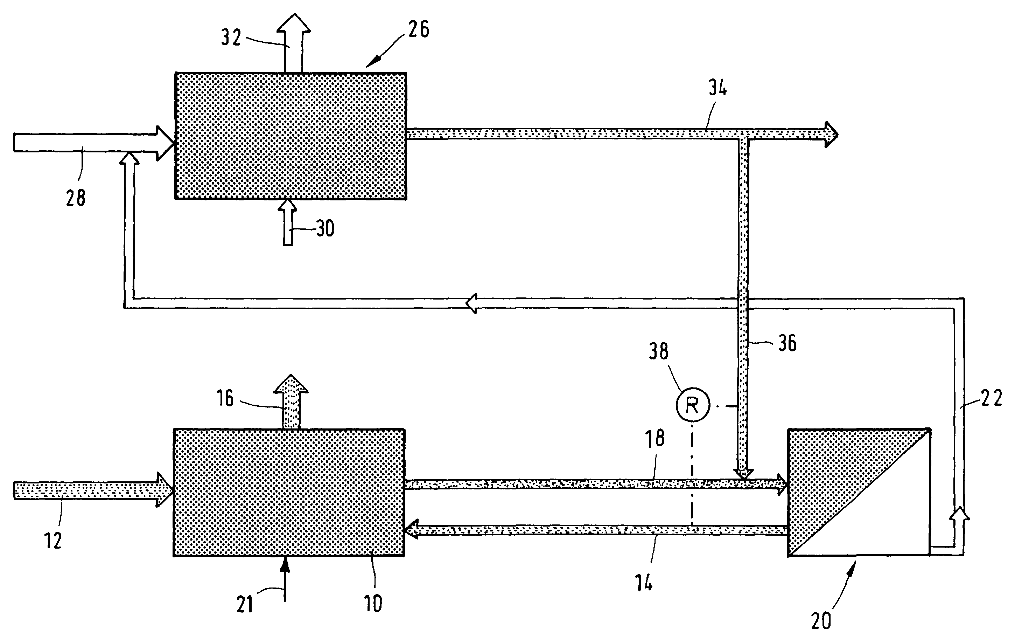

In der Zeichnung ist als Ausführungsbeispiel das Schaltbild eines Verfahrens zum Konditionieren von aschehaltigen Adsorbentien dargestellt, welches mit einem Verfahren zum Calcinieren von Kalkstein gekoppelt ist.

Das Ausführungsbeispiel wird im folgenden im Zusammenhang mit dem Konditionieren von aus Braunkohle hergestelltem Herdofenkoks beschrieben, wenngleich damit keine Beschränkung auf dieses Adsorbens verbunden sein soll.

In einer Wascheinrichtung 10 wird der kontinuierlich oder diskontinuierlich zugeführte Herdofenkoks 12 unter Verwendung von Wasser gewaschen, welches über eine Leitung 14 in die Wascheinrichtung 10 geführt wird. Der konditionierte, also weitgehend von Asche befreite Herdofenkoks 16 kann seiner Verwendung als Adsorbens zugeführt werden, wobei es nicht erforderlich ist, ihn vorher einem besonderen Trocknungsprozeß zu unterziehen. Vielmehr kann der Herdofenkoks in feuchtem Zustand, also mit an seinen Oberflächen anhaftendem Wasser zwischengelagert oder unmittelbar im Anschluß an den Waschvorgang als Adsorbens eingesetzt werden.

Das mit dem aus dem Herdofenkoks eluierten Begleitstoffen beladene Waschwasser wird über eine Leitung 18 in eine Begasungs- und Fällungseinrichtung 20 geführt, wobei dem beladenen, also beispielsweise Ca/Mg-Hydroxide in Lösung enthaltenden Waschwasser vor Erreichen der Begasungs- und Fällungseinrichtung 20 über eine Leitung 36 ein CO₂ -haltiges Gas zugemischt wird. Dies führt zu einer Fällungsreaktion in der Einrichtung 20 mit der Folge, daß sich im unteren Bereich der derselben die ausgefällten Substanzen, sammeln. Das so weitgehend gereinigte Wasser wird über die Leitung 14 in die Wascheinrichtung 10 zurück- und somit im Kreislauf geführt. Wasserverluste werden über eine Wasserzufuhr 21 ausgeglichen.

Das Fällungsprodukt, das bei dem hier angenommenen Ausführungsbeispiel in Form von Ca-/Mg-Carbonaten vorliegen kann, gelangt über eine Leitung oder ein sonstiges Transportmittel 22 in einen Ofen 26, in welchem z. B. in üblicher Weise gewonnener Kalkstein zu CaO/MgO gebrannt wird. Die dem Ofen zugeführte erforderliche Wärme ist mit 30 bezeichnet. Der gebrannte Kalk 32 wird aus dem Ofen 26 herausgenommen.

Das bei dem Calcinierprozeß anfallende CO₂-haltige, also saure Abgas 34 wird zumindest zu einem Teil über die Leitung 36 in der bereits beschriebenen Weise dem aus der Wascheinrichtung 10 kommenden beladenen Waschwasser zugemischt, so daß sich der Kreislauf schließt. Somit ist die vorstehend beschriebene und in der Zeichnung im Schema dargestellte Kombination der beiden Prozesse - Konditionieren des Adsorbens einerseits und Calcinierens von Kalkstein andererseits - außerordentlich umweltfreundlich und wirtschaftlich, da keine nennenswerten Produktströme nach außen abgegeben zu werden brauchen.

Einzelheiten des Waschvorganges z. B. hinsichtlich der Wassermenge pro Volumen- oder Gewichtseinheit an zu reinigendem Herdofenkoks und/oder der Kontaktzeit zwischen Waschwasser und Adsorbens können durch einfache Versuche bestimmt werden. Der pH-Wert und die Leitfähigkeit des beladenen Wassers sind von den Lösungsvorgängen innerhalb des Kokses abhängig. Ferner hängen die Lösungsvorgänge innerhalb des einzelnen Kokskornes, insbesondere ihre Intensität, auch vom pH-Wert des frischen Waschwassers ab, so daß es zweckmäßig sein kann, den pH-Wert des in die Wascheinrichtung einzuführenden, ggf. im Kreislauf geführten Waschwassers durch Regelung der Menge an saurem Gas, welches dem beladenen Wasser in beziehungsweise vor der Begasungs- und Fällungseinrichtung zugemischt wird, auf einen bestimmten Wert einzustellen. Zweifellos ergeben sich hier Möglichkeiten für eine weitgehende Automatisierung der Prozeßsteuerung. In der Zeichnung ist mit 38 eine Regeleinrichtung bezeichnet, mittels welcher der gewünschte pH-Wert des zurückgeführten Waschwassers dadurch eingestellt wird, daß geregelte Mengen an saurem Abgas dem beladenen Waschwasser zugeführt werden. Über einen solchen Regelkreis kann auch die für das Fällen der im beladenen Wasser befindlichen eluierten Substanzen erforderliche Menge an saurem Gas eingestellt werden.

## Patentansprüche

1. Verfahren zum Konditionieren von kohlenstoffhaltigen Adsorbentien, die mineralische Begleitstoffe enthalten und insbesondere zur Reinigung von Flüssigkeiten und/oder Flüssigkeiten enthaltenden oder bildenden Phasen verwendet werden, **dadurch gekennzeichnet**, daß das Adsorbens zum Zwecke des Konditionierens der Einwirkung einer Waschflüssigkeit ausgesetzt wird, die wenigstens einen Teil der Begleitstoffe des Adsorbens eluiert und aus diesem entfernt.

2. Verfahren nach Anspruch 1, **dadurch gekennzeichnet,** daß als Waschflüssigkeit Wasser verwendet wird.

3. Verfahren nach Anspruch 1, **dadurch gekennzeichnet,** daß die Waschflüssigkeit einen pH-Wert unter 8 aufweist, wenn die zu entfernenden Begleitstoffe basisch sind.

4. Verfahren nach Anspruch 1, **dadurch gekennzeichnet,** daß es bei atmosphärischem Druck durchgeführt wird.

5. Verfahren nach Anspruch 1, **dadurch gekennzeichnet,** daß es bei Umgebungstemperatur durchgeführt wird.

6. Verfahren nach Anspruch 1, **dadurch gekennzeichnet**, daß die Waschflüssigkeit im Kreislauf geführt wird.

7. Verfahren nach Anspruch 1, **dadurch gekennzeichnet,** daß das beladene Waschwasser der Einwirkung eines saueren Gases, vorzugsweise CO₂ ausgesetzt wird, um wenigstens einen Teil der basischen Verunreinigungen aus dem Waschwasser auszufällen.

8. Verfahren nach Anspruch 7, **dadurch gekennzeichnet,** daß zur Einstellung des pH-Wertes der gereinigten rückzuführenden Waschflüssigkeit geregelte Mengen an saurem Gas oder eines anderen Mediums zugemischt werden.

9. Verfahren nach Anspruch 1, **dadurch gekennzeichnet,** daß es zum Reinigen des beladenen Waschwassers mit einem Prozeß gekoppelt wird, bei dessen Durchführung ein saures Abgas, insbesondere CO₂-haltiges Abgas, entsteht.
